# EUROPEAN PATENT APPLICATION

(11) **EP 4 568 299 A1**
(43) Date of publication of application: **11.06.2025**
(21) Application number: 23856260.7
(22) Date of filing: 27.06.2023
(51) Int. Cl.: H04W 4/02

(54) **COMMUNICATION METHODS, APPARATUS, AND STORAGE MEDIUM**

(30) Priority: 24.08.2022 CN 202211022037
(71) Applicant: Huawei Technologies Co., Ltd., Shenzhen, Guangdong 518129 (CN)
(72) Inventor: CHEN, Ying, Shenzhen, Guangdong 518129 (CN); ZHANG, Jiayin, Shenzhen, Guangdong 518129 (CN); TIE, Xiaolei, Shenzhen, Guangdong 518129 (CN); DU, Yinggang, Shenzhen, Guangdong 518129 (CN)
(74) Representative: Maiwald GmbH
(86) International application number: PCT/CN2023/102880
(87) International publication number: WO 2024/041169

(57) **Abstract**

A communication method, an apparatus, and a storage medium are provided. The method includes: A terminal device receives first information sent by a network device, where the first information includes information about one or more timestamps; the terminal device determines timing advance (TA) compensation based on a reference location corresponding to the one or more timestamps; and the terminal device sends an SRS signal based on the TA compensation and a channel sounding reference signal (SRS) resource corresponding to the one or more timestamps, where each of the one or more timestamps corresponds to at least one SRS. In this way, after a correspondence between the SRS and the reference location is introduced, a TA difference can be obtained on a base station side, where the TA difference can be used for verifying a location of the terminal device.

## Description

### CROSS-REFERENCE TO RELATED APPLICATIONS

This application claims priority to Chinese Patent Application No. 202211022037.5, filed with the China National Intellectual Property Administration on August 24, 2022 and entitled "COMMUNICATION METHOD, APPARATUS, AND STORAGE MEDIUM", which is incorporated herein by reference in its entirety.

### TECHNICAL FIELD

This application relates to the field of communication technologies, and in particular, to a communication method, an apparatus, and a storage medium.

### BACKGROUND

Compared with terrestrial communication, satellite communication has unique advantages. For example, the satellite communication can provide wider coverage, and satellite base stations are not vulnerable to natural disasters or external forces. If the satellite communication is introduced to 5G communication, communication services can be provided for some areas that cannot be covered by terrestrial communication networks, such as oceans and forests; reliability of the 5G communication is enhanced, for example, it is ensured that airplanes, trains, and users on these transportation vehicles can obtain better communication services; and more data transmission resources are provided for the 5G communication, to improve network rates. Therefore, supporting both the terrestrial communication and the satellite communication is an inevitable trend of the 5G communication, and has great benefits in terms of wide coverage, reliability, multi-connection, a high throughput, and the like.

Currently, the satellite communication has been introduced in a 3GPP standard, and is used as a communication scenario of the 5G communication. In the standard, timing, synchronization, HARQ, and other technologies are enhanced to adapt to features of a long delay and high mobility. However, in existing terrestrial communication, a network side may complete positioning of a terminal, or complete verification of a location reported by the terminal. However, a 3GPP satellite communication system does not have this function. This technology is more important in satellite communication scenarios because a satellite beam is usually large and may cover areas of two countries. Different countries have different laws and regulations. Therefore, a network needs to know a location of the terminal, and use different laws and regulations or provide different services. If the location reported by the terminal cannot be verified, the network side may not provide a corresponding service for UE, or forbid the UE from continuing to connect to the network. Therefore, a location verification method in satellite communication needs to be found.

### SUMMARY

Embodiments of this application provide a communication method, an apparatus, and a storage medium, to improve flexibility of scheduling of enabling or disabling a HARQ process, and reduce a scheduling delay.

According to a first aspect, an embodiment of this application provides a communication method, including: A first communication apparatus receives first information, where the first information includes information about one or more timestamps;
the first communication apparatus determines timing advance (TA) compensation based on a reference location corresponding to the one or more timestamps; and
the first communication apparatus sends an SRS signal based on the TA compensation and a channel sounding reference signal (SRS) resource corresponding to the one or more timestamps, where each of the one or more timestamps corresponds to at least one SRS.

According to the communication method provided in the first aspect, because the timestamp corresponding to the SRS is in one-to-one correspondence with the reference location, a TA time difference can be obtained on a network device side, and a residual TA on a base station side can be reduced as a satellite moves. Even if there is only one network device (satellite), location verification can be effectively completed, thereby overcoming limitations of a terrestrial positioning method.

In a possible implementation, the first communication apparatus receives the reference location corresponding to the one or more timestamps.

In a possible implementation, that the first communication apparatus determines TA compensation based on a reference location corresponding to the one or more timestamps specifically includes: The first communication apparatus determines the TA compensation based on a geographical location of the first communication apparatus and the reference location corresponding to the one or more timestamps.

In a possible implementation, the method further includes: The first communication apparatus receives ephemeris information.

In a possible implementation, the method further includes: The first communication apparatus sends information about the TA compensation.

In a possible implementation, the method further includes: The first communication apparatus receives SRS group information.

In a possible implementation, the method further includes: The first communication apparatus sends a TA compensation difference between different SRS groups.

According to a second aspect, an embodiment of this application provides a communication method, including:
A second communication apparatus sends first information, where the first information includes information about one or more timestamps;
the second communication apparatus receives an SRS signal based on a channel sounding reference signal (SRS) resource corresponding to the one or more timestamps, where each of the one or more timestamps corresponds to at least one SRS;
the second communication apparatus determines a TA time difference based on the SRS signal; and
the second communication apparatus sends the TA time difference.

In a possible implementation, the method further includes: The second communication apparatus sends a reference location corresponding to the one or more timestamps.

In a possible implementation, the method further includes: The second communication apparatus sends ephemeris information.

In a possible implementation, the method further includes: The second communication apparatus receives information about the TA compensation.

In a possible implementation, the method further includes: The second communication apparatus sends SRS group information.

In a possible implementation, the method further includes: The second communication apparatus receives a TA compensation difference between different SRS groups.

In a possible implementation, the method further includes: The second communication apparatus receives second information from a location management function LMF entity, where the second information includes content in the first information.

In a possible implementation, the method further includes: The second communication apparatus sends second information or a third message to a location management function LMF entity, where content included in the second information is the same as content in the first information, and the third message includes the content in the second information.

According to the communication method provided in the second aspect and various possible implementations, because the timestamp corresponding to the SRS is in one-to-one correspondence with the reference location, the TA time difference can be obtained on a network device side, and a residual TA on a base station side can be reduced as a satellite moves. Even if there is only one network device (satellite), location verification can be effectively completed, thereby overcoming limitations of a terrestrial positioning method.

According to a third aspect, an embodiment of this application provides a communication method, including:
A third communication apparatus sends second information, where the second information includes information about one or more timestamps and SRS resource information corresponding to each timestamp; and
the third communication apparatus receives a TA time difference, where the TA time difference is obtained based on the one or more timestamps and a channel sounding reference signal (SRS) resource corresponding to the one or more timestamps, where each of the one or more timestamps corresponds to at least one SRS.

In a possible implementation, the third communication apparatus receives ephemeris information.

In a possible implementation, the method further includes: The third communication apparatus receives third information, where the third message includes content in the second information.

According to the communication method provided in the third aspect and various possible implementations, because the timestamp corresponding to the SRS is in one-to-one correspondence with a reference location, the TA time difference can be obtained on a network device side, and a residual TA on a base station side can be reduced as a satellite moves. Even if there is only one network device (satellite), location verification can be effectively completed, thereby overcoming limitations of a terrestrial positioning method.

According to a fourth aspect, an embodiment of this application provides a communication apparatus, including a transceiver unit and a processing unit.

The transceiver unit is configured to receive first information, where the first information includes information about one or more timestamps.

The processing unit is configured to determine timing advance (TA) compensation based on a reference location corresponding to the one or more timestamps.

The transceiver unit is further configured to send an SRS signal based on the TA compensation and a channel sounding reference signal (SRS) resource corresponding to the one or more timestamps, where each of the one or more timestamps corresponds to at least one SRS.

In a possible implementation, the transceiver unit is further configured to receive the reference location corresponding to the one or more timestamps.

In a possible implementation, that the processing unit is configured to determine TA compensation based on a reference location corresponding to the one or more timestamps specifically includes: The processing unit determines the TA compensation based on a geographical location of the communication apparatus and the reference location corresponding to the one or more timestamps.

In a possible implementation, the transceiver unit is further configured to receive ephemeris information.

In a possible implementation, the transceiver unit is further configured to send information about the TA compensation.

In a possible implementation, the transceiver unit is further configured to receive SRS group information.

In a possible implementation, the transceiver unit is further configured to send a TA compensation difference between different SRS groups.

For beneficial effects of the communication apparatus provided in the fourth aspect and the possible implementations of the fourth aspect, refer to the beneficial effects brought by the first aspect and the possible implementations of the first aspect. Details are not described herein again.

According to a fifth aspect, an embodiment of this application provides a communication apparatus, including a transceiver unit and a processing unit.

The transceiver unit is configured to: send first information, where the first information includes information about one or more timestamps; and receive an SRS signal based on a channel sounding reference signal (SRS) resource corresponding to the one or more timestamps, where each of the one or more timestamps corresponds to at least one SRS.

The processing unit is configured to determine a TA time difference based on the SRS signal.

The transceiver unit is further configured to send the TA time difference.

In a possible implementation, the transceiver unit is further configured to send a reference location corresponding to the one or more timestamps.

In a possible implementation, the transceiver unit is further configured to send ephemeris information.

In a possible implementation, the transceiver unit is further configured to receive information about the TA compensation.

In a possible implementation, the transceiver unit is further configured to send SRS group information.

In a possible implementation, the transceiver unit is further configured to receive a TA compensation difference between different SRS groups.

In a possible implementation, the transceiver unit is further configured to receive second information from a location management function LMF entity, where the second information includes content in the first information.

In a possible implementation, the transceiver unit is further configured to send second information or a third message to a location management function LMF entity, where content included in the second information is the same as content in the first information, and the third message includes the content in the second information.

For beneficial effects of the communication apparatus provided in the fifth aspect and the possible implementations of the fifth aspect, refer to the beneficial effects brought by the second aspect and the possible implementations of the second aspect. Details are not described herein again.

According to a sixth aspect, an embodiment of this application provides a communication apparatus, including a processing unit and a transceiver unit.

The transceiver unit is configured to send second information, where the second information includes information about one or more timestamps and SRS resource information corresponding to each timestamp.

The transceiver unit is further configured to receive a TA time difference, where the TA time difference is obtained based on the one or more timestamps and a channel sounding reference signal (SRS) resource corresponding to the one or more timestamps, where each of the one or more timestamps corresponds to at least one SRS.

The processing unit is configured to perform terminal positioning based on the TA time difference.

In a possible implementation, the transceiver unit is further configured to receive ephemeris information.

In a possible implementation, the transceiver unit is further configured to receive third information, where the third message includes content in the second information.

For beneficial effects of the communication apparatus provided in the sixth aspect and the possible implementations of the sixth aspect, refer to the beneficial effects brought by the third aspect and the possible implementations of the third aspect. Details are not described herein again.

According to a seventh aspect, an embodiment of this application provides a communication device, including a processor and a memory, where the memory is configured to store a computer program, and the processor is configured to invoke the computer program stored in the memory and run the computer program, to perform the method in any one of the first aspect, the second aspect, the third aspect, or the possible implementations.

According to an eighth aspect, an embodiment of this application provides a communication system, including a terminal device, a network device, and a location management function LMF entity, where the terminal device is configured to perform the method in the first aspect or the possible implementations, the network device is configured to perform the method in the second aspect or the possible implementations, and the LMF entity is configured to perform the method in the third aspect or the possible implementations.

According to a ninth aspect, an embodiment of this application provides a chip, including a processor, configured to invoke computer instructions from a memory and run the computer instructions, so that a device in which the chip is installed performs the method in any one of the first aspect, the second aspect, the third aspect, or the possible implementations.

According to a tenth aspect, an embodiment of this application provides a computer-readable storage medium, configured to store computer program instructions. The computer program enables a computer to perform the method in any one of the first aspect, the second aspect, the third aspect, or the possible implementations.

According to an eleventh aspect, an embodiment of this application provides a computer program product, including computer program instructions, where the computer program instructions enable a computer to perform the method in any one of the first aspect, the second aspect, the third aspect, or the possible implementations.

### BRIEF DESCRIPTION OF DRAWINGS

FIG. 1 is a diagram of a satellite communication system according to an embodiment of this application;
FIG. 1A is a diagram of a satellite communication system according to an embodiment of this application;
FIG. 1B is a diagram of a satellite communication system according to an embodiment of this application;
FIG. 1C is a diagram of a satellite communication system according to an embodiment of this application;
FIG. 2 is a schematic interaction flowchart of a communication method according to an embodiment of this application;
FIG. 3 is a schematic interaction flowchart of a communication method according to an embodiment of this application;
FIG. 4 is a block diagram of an apparatus according to an embodiment of this application; and
FIG. 5 is another block diagram of an apparatus according to an embodiment of this application.

### DESCRIPTION OF EMBODIMENTS

The following describes technical solutions of this application with reference to accompanying drawings.

A communication method provided in this application may be applied to various communication systems, for example, a global system for mobile communication (Global System for Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an advanced long term evolution (Advanced long term evolution, LTE-A) system, a new radio (New Radio, NR) system, an evolved system of the NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial network (Non-Terrestrial Network, NTN) system, a universal mobile telecommunications system (Universal Mobile Telecommunications System, UMTS), a wireless local area network (Wireless Local Area Network, WLAN), wireless fidelity (Wireless Fidelity, Wi-Fi), a 5th-generation (5th-Generation, 5G) communication system or another communication system, or a future communication system (for example, a 6th-generation communication system).

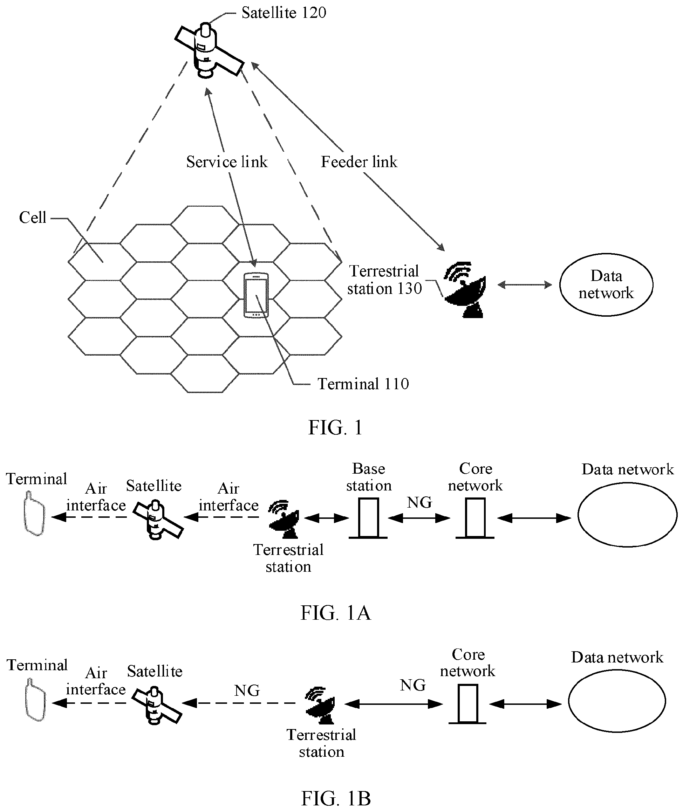

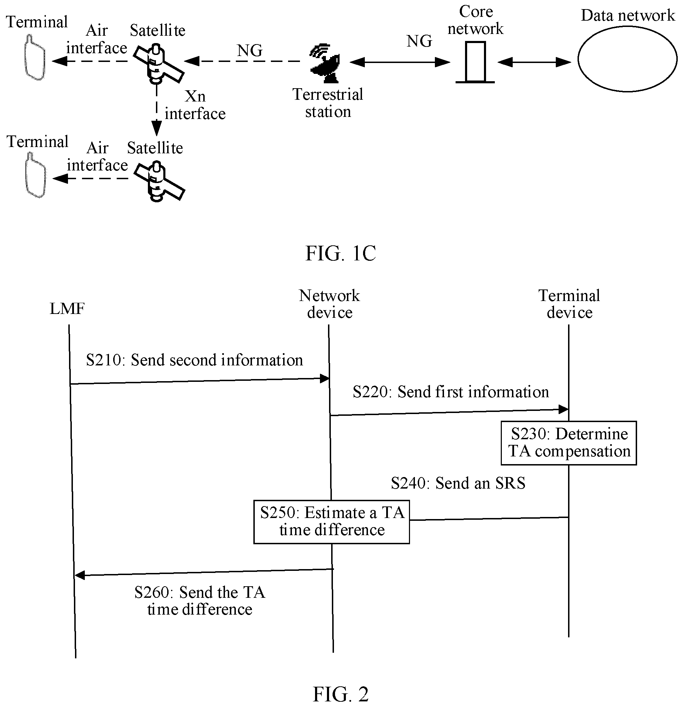

The technical solutions provided in embodiments of this application may be applied to a satellite communication system shown in FIG. 1. An architecture of the system may include a terminal 110, a satellite 120, and a terrestrial station 130.

The terminal 110 may be an access terminal, a user equipment (User Equipment, UE) unit, a UE station, a mobile station, a remote station, a remote terminal, a mobile device, a UE terminal, a terminal, a wireless communication device, a UE agent, a UE apparatus, a virtual reality terminal device, an augmented reality terminal device, a wireless terminal in industry control, or the like. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future-evolved PLMN network, or the like.

The satellite 120 corresponds to a service coverage area, and a terminal entering the area may receive a radio access service via the satellite 120. The service coverage area of the satellite 120 on the ground is divided into a plurality of cells, and one beam of the satellite 120 may correspond to one cell. The terminal 110 receives a communication service of the satellite 120 by accessing a cell. The satellite 120 may be a geostationary earth orbit (geostationary earth orbit, GEO) satellite, or may be a non-geostationary earth orbit (none-geostationary earth orbit, NGEO) satellite which is alternatively referred to as a non-GEO satellite, where the NGEO satellite includes a low earth orbit (low earth orbit, LEO) satellite, a medium earth orbit (medium earth orbit, MEO) satellite, or the like.

The terrestrial station 130 is configured to connect the satellite 120 to a terrestrial network. For example, the terrestrial station 130 may connect the satellite 120 to a core network, and connect to a data network over the core network. One GEO satellite may be served by one or more terrestrial stations. The one or more terrestrial stations are distributed in a target coverage area of the satellite. One NGEO satellite is served by one terrestrial station simultaneously.

A wireless connection between the terrestrial station 130 and the satellite 120 is referred to as a feeder link (feeder link). A wireless connection between the terminal 110 and the satellite 120 is referred to as a service link (service link).

It should be noted that the architecture of the system shown in FIG. 1 is only an example, and is not intended to limit the technical solutions of this application. A person skilled in the art should understand that, in a specific implementation process, the architecture of the system may further include another device, for example, a base station or a core network device.

In some embodiments, the architecture of the system shown in FIG. 1 may be in a form shown in FIG. 1A.

In FIG. 1A, a data network provides a data service for a terminal.

Main functions of a core network are to provide a user connection, manage a user, and complete service carrying, and the core network serves as a bearer network to provide an interface to an external network. The user management includes user mobility management, call management, route management, security management, and the like. An NR system is used as an example. A device in the core network may include an access and mobility management function (access and mobility management function, AMF) entity, a location management function (location management function, LMF) entity, a session management function (session management function, SMF) entity, a unified data management (unified data management, UDM) entity, a network slice selection function (network slice selection function, NSSF) entity, and the like. It is clear that the core network may further include another device and function entity, or other function entities may be used to replace the foregoing function entities to provide the foregoing functions, and a quantity of function entities may be configured based on a specific requirement. The core network may alternatively be a device or system providing the foregoing functions in a future-evolved system or a plurality of communication convergence systems. This is not limited in embodiments of this application.

A base station provides access and network services for the terminal. The base station may include various forms of base stations, for example, a macro base station, a micro base station (also referred to as a small cell), a relay station, and an access point. For example, the base station may be a node in a 5G NR system network, where the 5G node may be an access node, a next generation NodeB (generation NodeB, gNB), a transmission reception point (transmission reception point, TRP), a transmission point (transmission point, TP), or another access node.

A satellite, serving as a forwarding unit, is configured to forward a signal between a terminal and a base station. The satellite communicates with the base station via a terrestrial station. The satellite, the terrestrial station, and the base station form a radio access network of a satellite communication system.

New radio is a radio link between the terminal and the base station.

An Xn interface is an interface between 5G base stations, and is mainly for signaling exchange, such as switching.

An NG interface is an interface between a 5G base station and a 5G core network, and is mainly for exchanging user service data and signaling such as NAS of the core network.

In some other embodiments, the architecture of the system shown in FIG. 1 may be in a form shown in FIG. 1B. Different from the architecture of the system shown in FIG. 1A, a satellite in FIG. 1B serves as a forwarding unit, and can implement functions of the satellite and the base station in FIG. 1A, to provide a radio access service for a terminal. In FIG. 1B, the satellite accesses a terrestrial core network via a terrestrial station.

In some embodiments, there is no communication link between satellites, and direct communication cannot be performed. In some other embodiments, as shown in FIG. 1C, there is an inter-satellite link between satellites, where the inter-satellite link is used for direct communication between satellites.

It should be noted that the architectures of the systems shown in FIG. 1A to FIG. 1C are only examples, and are not intended to limit the technical solutions of this application. A person skilled in the art should understand that, in a specific implementation process, the architecture of the system may further include another device. In addition, during actual application, a quantity of device in the architecture of the system may be configured based on a requirement. For example, in FIG. 1A, one satellite corresponds to one base station, and this is only an example for description. During actual application, one satellite may forward signals for a plurality of base stations.

There are many existing terrestrial network positioning methods, and a terminal can be positioned based on a delay, a delay difference, a receiving angle, and the like of a reference signal. Examples are as follows.

UL-TOA (Uplink-Time of Arrival, uplink-time of arrival): Distances between different base stations and a mobile phone are calculated by measuring time of arrival of reference signals received by a plurality of base stations. Concentric circles are drawn respectively by using the distances as radii. Then, a location of the mobile phone is estimated based on a positioning algorithm (a trilateral location algorithm or a least square algorithm).

UL-TDOA (Uplink-Time Difference of Arrival, uplink-time difference of arrival): A sounding reference signal (Sounding Reference Signal, SRS) is used as an uplink reference positioning signal. Each base station measures uplink-relative time of arrival (Uplink-Relative Time of Arrival, UL-RTOA), and reports a measurement result to a location server. The location server positions a location of a terminal based on a time difference of arrival. From a mathematical perspective, the location of the mobile phone needs to be located on a hyperbola in which two base stations are used as focuses and a distance difference between the two base stations is used as a constant difference. In this way, three or more surrounding base stations can form two or more hyperbolas, where any two of the three or more surrounding base stations form a hyperbola, and an intersection point of the hyperbolas is two-dimensional location coordinates of the mobile phone.

These methods cannot be directly applied to satellite communication, and reasons are as follows.
(1) The satellite communication has a long transmission delay. A terminal performs open-loop and closed-loop timing advance (Timing Advance, TA) compensation based on locations of a satellite and the terminal (where a timing advance is equal to a round-trip transmission delay from the terminal to a base station). The TA compensation varies with the satellite based on UE implementation. Therefore, a base station side cannot obtain an absolute TA or a relative TA based on SRS measurement. Consequently, TDOA or TOA cannot be implemented.
(2) Terrestrial positioning depends on receiving SRSs by a plurality of base stations. If the terrestrial positioning is applied to the satellite communication, uplink signals sent by the terminal also need to be received by a plurality of satellites. In this case, these positioning methods are limited to a scenario in which a plurality of satellites have an overlapping coverage area and each can receive the uplink signals of the terminal on corresponding resources. It is clear that this scenario is difficult to be met at any time due to mobility of the satellites. Consequently, a requirement may not be met at any time. It can be learned that the multi-satellite joint positioning scenario has a great limitation.

In view of this, this application provides a positioning method applicable to the satellite communication, to overcome limitations of the terrestrial positioning method.

For ease of understanding of embodiments of this application, the following several descriptions are provided.

First, the terms "first", "second", and various numbers in the following embodiments are only used for differentiation for ease of description, and are not used to limit the scope of embodiments of this application. For example, the terms are used for distinguishing between different information, thresholds, and parameters are distinguished.

Second, "predefinition" may be implemented by pre-storing corresponding code or a corresponding table in a device (for example, including a terminal device and a network device), or may be implemented in another manner that may indicate related information. A specific implementation of "predefinition" is not limited in this application.

"Preconfiguration" may be implemented by pre-storing corresponding code or a corresponding table in a device (for example, including a terminal device and a network device), may be implemented in another manner that may indicate related information, or may be implemented by using signaling preconfiguration. For example, the network device is implemented by using signaling preconfiguration. A specific implementation of "preconfiguration" is not limited in this application.

In embodiments of this application, a preset resource may be a predefined resource, or may be a preconfigured resource, or a resource indicated by a base station by using radio resource control (radio resource control, RRC) and/or downlink control information (downlink control information, DCI).

Third, the "protocol" in embodiments of this application may be a standard protocol in the communication field, for example, including an LTE protocol, an NR protocol, and a related protocol applied to a future communication system. This is not limited in this application.

Fourth, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects.

The following describes the communication method in embodiments of this application with reference to the accompanying drawings.

It should be understood that, for ease of understanding and description, the following mainly describes the method provided in embodiments of this application by using interaction between a terminal device, a network device, and an LMF as an example. For example, the terminal device may be the terminal 110 in the satellite communication system shown in FIG. 1, and the network device may be the satellite 120 in the communication system shown in FIG. 1.

However, it should be understood that this should not constitute any limitation on an execution body of the method provided in this application. Any device that can perform, by using a program that can run code of the method provided in embodiments of this application, the method provided in embodiments of this application may be used as an execution body of the method provided in embodiments of this application. For example, the terminal device shown in the following embodiments may alternatively be replaced with a component in the terminal device, for example, a chip, a chip system, or another functional module that can invoke a program and execute the program. The network device shown in the following embodiments may alternatively be replaced with a component in the network device, for example, a chip, a chip system, or another functional module that can invoke a program and execute the program.

FIG. 2 is a schematic interaction flowchart of a communication method according to an embodiment of this application. As shown in FIG. 2, steps are described as follows.

S210: An LMF sends second information to a network device, where the second information includes one or more timestamps configured for a terminal device, and if the second information includes a plurality of timestamps, the second information further includes SRS resource information corresponding to each timestamp. The resource information may be a predefined or protocol-specified resource index in a resource set. Provided that no ambiguity is caused, the "one or more timestamps" is briefly referred to as the "timestamps" in the following descriptions.

Optionally, before step S210, the network device first sends third information to the LMF, where content included in the second information is a subset of the third information. To be specific, the network device first determines at least one of the SRS resource information, the timestamps, and reference location information that can be used for the terminal device, and then, the LMF determines the second information from these parameters. Optionally, content in the third information is consistent with the content in the second information. The network device may further provide ephemeris information and/or parameter information of a common TA for the LMF, where the ephemeris information may be orbit parameter information and time information corresponding to the ephemeris information, or may be location and speed parameter information and time information.

S220: The network device sends first information to the terminal device, where the first information includes the timestamps configured for the terminal device, and if the first information includes the plurality of timestamps, the second information further includes the SRS resource information corresponding to each timestamp. The resource information may be a predefined or protocol-specified resource index in a resource set. It can be learned that the second information may be transparently transmitted first information, or may be information obtained through recombination after the first information is repackaged.

S230: The terminal device determines TA compensation based on geographical location information of the terminal device and a network device reference location corresponding to a received timestamp, where the network device reference location corresponding to the received timestamp may be obtained by the terminal device through calculation based on the received timestamp and received ephemeris information sent by the network device, or may be directly sent by the network device to the terminal device. For example, the second information and the first information may further include the reference location information. A quantity of timestamps may be the same as a quantity of reference locations.

S240: The terminal device sends an SRS signal based on the TA compensation and an SRS resource obtained in step S230. In other words, when sending the SRS on the SRS resource, corresponding TA compensation needs to be performed. Each SRS has a corresponding timestamp. For example, all SRSs correspond to a same timestamp, or a plurality of SRSs correspond to a same timestamp. Optionally, the terminal device may further directly send the obtained TA compensation value to the network device.

S250: The network device estimates a TA time difference based on the received SRS. For a plurality of SRSs, TA compensation is performed based on a reference location corresponding to a same timestamp. Although the network device does not know a specific amount of TA compensation performed by the UE, a plurality of SRS resources corresponding to the TA are the same. Therefore, the TA time difference detected by the network device is equal to an actual TA time difference.

S260: The network device sends the TA time difference to the LMF.

S270 (not shown in the figure): The LMF calculates a location of the terminal device based on the received TA time difference and the network device reference location corresponding to the timestamp corresponding to a configured SRS resource, to verify the location of the terminal device.

Optionally, when the network device receives the TA compensation value, step S260 may be replaced with that the network device reports the TA compensation value and a TA offset to the LMF. The TA offset is generated when the network device detects the SRS. A specific method for calculating the TA offset is not a focus of this application, and the TA offset may be calculated by using a technology commonly used by a person skilled in the art. In this case, the LMF may alternatively calculate the location of the terminal device based on the TA compensation value and the TA offset, to verify the location of the terminal device.

Optionally, the LMF is disposed in the network device.

It can be learned that, in a UL-TDOA method in terrestrial positioning, common TA compensation is performed for a location of a transmission reception point (transmit reception point, TRP). However, a satellite location changes with time. As a result, the terminal device may not be able to perform the TA compensation based only on a location. If the TA compensation is performed only for a location, a TA on a base station side is excessively large, and exceeds a detection range. Therefore, after the timestamp corresponding to the SRS is introduced in the foregoing embodiment, because the timestamp is in one-to-one correspondence with the reference location, the TA time difference can be obtained on a network device side, and a residual TA on the base station side can be reduced as a satellite moves. Even if there is only one network device (satellite), location verification can be effectively completed, thereby overcoming limitations of a terrestrial positioning method.

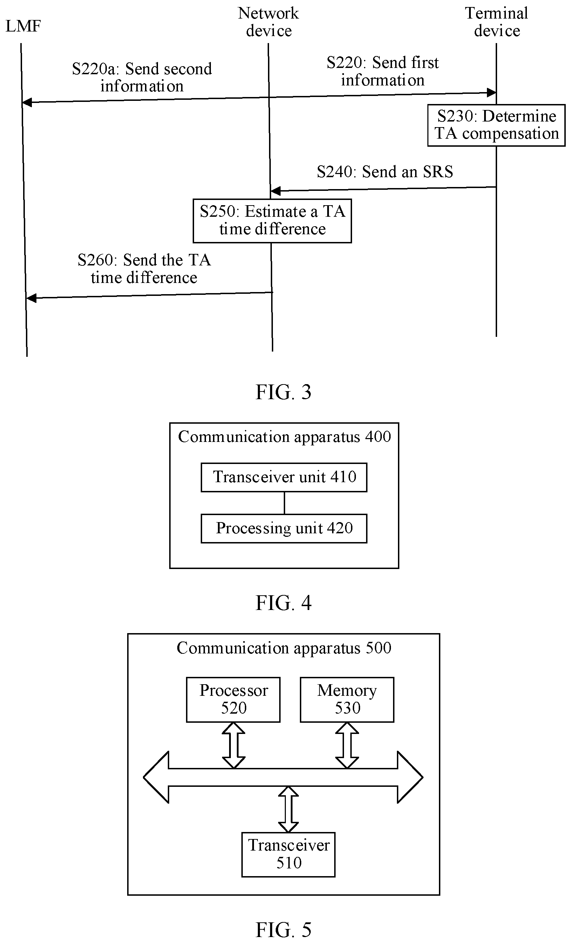

FIG. 3 is a schematic interaction flowchart of a communication method according to an embodiment of this application. In comparison with FIG. 2, a main difference is that step S220a replaces step S210. In this case, timestamp information included in the first information and the second information in the foregoing embodiment is determined by a network device, and other steps are the same as the steps corresponding to FIG. 2. Details are not described again.

Optionally, in step S220a, the network device may further provide ephemeris information and/or parameter information of a common TA for an LMF, where the ephemeris information may be orbit parameter information and time information corresponding to the ephemeris information, or may be location and speed parameter information and time information.

In another embodiment, a terminal device may implement fixed TA compensation according to an agreed rule or in an indication manner. Examples are as follows.
(1) According to an agreed rule: In a configured SRS resource, the terminal uses, according to an agreement, a TA used for compensation when a 1^{st} SRS is sent as TA compensation for another SRS.
(2) In an indication manner: In a configured SRS resource, a network device side indicates that a TA corresponding to X SRS resources is used as TA compensation for another SRS. The terminal device needs to derive, based on first X-1 SRSs, a TA compensation value corresponding to an X^{th} SRS, and perform TA compensation on the X^{th} SRS based on the derived TA compensation value, where X is an integer greater than 1.
(3) A plurality of SRS resources may be used as reference resources. For example, for 1^{st} to Y^{th} SRS resources, compensation is performed based on a TA corresponding to the 1^{st} SRS resource, and for (Y+1)^{th} to Z^{th} SRS resources, compensation is performed based on a TA compensation value corresponding to an (a+1)^{th} SRS resource, where both Y and Z are positive integers, and Z is greater than Y.
(4) In addition to the foregoing manners, a network device side may alternatively indicate that the terminal uses a TA corresponding to a specific UL slot (or a subframe, or a symbol) as TA compensation for sending several SRS signals.
(5) The terminal device uses same TA compensation for one SRS group. In this case, a TA difference of a network is equal to an actual TA difference.
(6) In the manner (5), the terminal device may change a TA used for compensation performed by the terminal device, but the network device needs to know specific SRSs corresponding to same TA compensation. For example, for 1^{st} to Y^{th} SRS resources, the terminal performs compensation based on a TA 1, and for (Y+1)^{th} to Z^{th} SRS resources, the terminal performs compensation based on a TA 2. In this case, the terminal, the network side, and the LMF need to agree on an SRS resource for TA compensation switching, or report information for TA compensation switching, for example, report a resource index corresponding to a (Y+1)^{th} SRS, where Y and Z are both positive integers, and Z is greater than Y. The LMF performs location verification based on SRSs with a same TA.
(7) On the basis of (6), the terminal device may further send a TA compensation difference between different SRS groups to the network device. This helps the network side perform inter-group joint positioning.
(8) For the manner (5), the network device may alternatively directly indicate, to the terminal device, specific SRSs that need to use a same TA for compensation, that is, SRS group information. It should be noted that the terminal only uses a same TA for compensation, and a specific time point or a satellite ephemeris corresponding to a time domain resource based on which TA compensation is performed is not limited. If a TA difference detected by the network device is equal to an actual TA difference, it indicates that the terminal does not update, as a satellite changes, a TA used for compensation performed by the terminal.

In this embodiment, fixed TA compensation may be implemented, and a specific timestamp (time point) or reference location information does not need to be agreed.

FIG. 4 is a block diagram of an apparatus according to an embodiment of this application. As shown in FIG. 4, an apparatus 400 may include a transceiver unit 410 and a processing unit 420.

Optionally, the communication apparatus 400 may correspond to the terminal device in the foregoing method embodiments, for example, may be a terminal device, or a component (for example, a chip or a chip system) disposed in the terminal device.

It should be understood that the units in the communication apparatus 400 are separately configured to implement corresponding procedures of the methods in the foregoing embodiments.

When the communication apparatus 400 is configured to implement the methods shown in FIG. 2 and FIG. 3, the transceiver unit 410 may be configured to receive first information sent by a network device and send an SRS. The processing unit 420 may be configured to determine, according to the methods in the foregoing embodiments, TA compensation required for sending the SRS, and control the transceiver unit 410 to send the SRS.

It should be understood that a specific process in which the units perform the foregoing corresponding steps is described in detail in the foregoing method embodiments, and for brevity, details are not described herein.

Optionally, the communication apparatus 400 may correspond to the network device in the foregoing method embodiments, for example, may be a network device, or a component (for example, a chip or a chip system) disposed in the network device.

It should be understood that the modules in the communication apparatus 400 are separately configured to implement corresponding procedures of the methods in the foregoing embodiments.

The transceiver unit 410 may be configured to: receive second information from an LMF, send first information to a terminal device, receive an SRS from the terminal device, and send a TA time difference to the LMF. The processing unit 420 is configured to estimate the TA time difference. Optionally, the transceiver unit 410 is further configured to send third information and/or ephemeris information to the LMF.

It should be understood that a specific process in which the units perform the foregoing corresponding steps is described in detail in the foregoing method embodiments, and for brevity, details are not described herein.

Optionally, the communication apparatus 400 may correspond to the LMF in the foregoing method embodiments, for example, may be an LMF entity, or a component (for example, a chip or a chip system) disposed in a core network device.

It should be understood that the modules in the communication apparatus 400 are separately configured to implement corresponding procedures of the methods in the foregoing embodiments.

The transceiver unit 410 may be configured to send the second information to a network device, and receive a TA time difference from the network device. The processing unit 420 is configured to determine a location of a terminal. Optionally, the transceiver unit 410 is further configured to receive third information and/or ephemeris information from the network device.

It should be understood that a specific process in which the units perform the foregoing corresponding steps is described in detail in the foregoing method embodiments, and for brevity, details are not described herein.

When the apparatus 400 is a terminal device, a network device, or an LMF entity, the transceiver unit 410 in the apparatus 400 may be implemented by a transceiver, for example, may correspond to a transceiver 510 in an apparatus 500 shown in FIG. 5. The processing unit 420 in the apparatus 400 may be implemented by at least one processor, for example, may correspond to a processor 520 in the apparatus 500 shown in FIG. 5.

When the apparatus 400 is a chip or a chip system disposed in a communication device (for example, a terminal device, a network device, or an LMF entity), the transceiver unit 410 in the apparatus 400 may be implemented by an input/output interface, a circuit, or the like, and the processing unit 420 in the apparatus 400 may be implemented by a processor, a microprocessor, an integrated circuit, or the like integrated into the chip or the chip system.

FIG. 5 is another block diagram of an apparatus according to an embodiment of this application. As shown in FIG. 5, the apparatus 500 may include a transceiver 510, a processor 520, and a memory 530. The transceiver 510, the processor 520, and the memory 530 communicate with each other through an internal connection path. The memory 530 is configured to store instructions. The processor 520 is configured to execute the instructions stored in the memory 530, to control the transceiver 510 to send a signal and/or receive a signal.

It should be understood that the apparatus 500 may correspond to the terminal device or the network device in the foregoing method embodiments, and may be configured to perform steps and/or procedures performed by the terminal device or the network device in the foregoing method embodiments. Optionally, the memory 530 may include a read-only memory and a random access memory, and provide instructions and data for the processor. A part of the memory may further include a non-volatile random access memory. The memory 530 may be a separate device, or may be integrated into the processor 520. The processor 520 may be configured to execute the instructions stored in the memory 530. When the processor 520 executes the instructions stored in the memory, the processor 520 is configured to perform the steps and/or procedures corresponding to the terminal device or the network device in the foregoing method embodiments.

Optionally, the apparatus 500 is the terminal device in the foregoing embodiments.

Optionally, the apparatus 500 is the network device in the foregoing embodiments.

The transceiver 510 may include a transmitter and a receiver. The transceiver 510 may further include one or more antennas. The processor 520, the memory 530, and the transceiver 510 may be devices integrated into different chips. For example, the processor 520 and the memory 530 may be integrated into a baseband chip, and the transceiver 510 may be integrated into a radio frequency chip. The processor 520, the memory 530, and the transceiver 510 may alternatively be devices integrated into a same chip. This is not limited in this application.

Optionally, the apparatus 500 is a component disposed in the terminal device, for example, a chip or a chip system.

Optionally, the apparatus 500 is a component disposed in the network device, for example, a chip or a chip system.

The transceiver 520 may alternatively be a communication interface, for example, an input/output interface or a circuit. The transceiver 520, the processor 510, and the memory 530 may all be integrated into a same chip, for example, integrated into a baseband chip.

This application further provides a processing apparatus. The apparatus includes at least one processor, where the at least one processor is configured to execute a computer program stored in a memory, so that the processing apparatus performs the method performed by the terminal device or the network device in the foregoing method embodiments.

An embodiment of this application further provides a processing apparatus. The apparatus includes a processor and an input/output interface. The input/output interface is coupled to the processor. The input/output interface is configured to input and/or output information. The information includes at least one of the following: instructions and data. The processor is configured to execute a computer program, so that the processing apparatus performs the method performed by the terminal device or the network device in the foregoing method embodiments.

An embodiment of this application further provides a processing apparatus. The apparatus includes a processor and a memory. The memory is configured to store a computer program, and the processor is configured to invoke the computer program from the memory and run the computer program, so that the processing apparatus performs the method performed by the terminal device or the network device in the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on a chip (system on a chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

In an implementation process, steps in the foregoing methods can be implemented by using a hardware integrated logical circuit in the processor, or by using instructions in a form of software. The steps in the methods disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed by a hardware decoding processor, or may be performed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories in the systems and methods described in this specification include but are not limited to these memories and any memory of another proper type.

According to the method provided in embodiments of this application, this application further provides a computer program product, where the computer program product includes computer program code. When the computer program code is run on a computer, the computer is enabled to perform the method performed by the terminal device or the network device in the foregoing method embodiments.

According to the methods provided in embodiments of this application, this application further provides a computer-readable storage medium, where the computer-readable storage medium stores program code. When the program code is run on a computer, the computer is enabled to perform the method performed by the terminal device or the network device in the foregoing method embodiments.

According to the methods provided in embodiments of this application, this application further provides a communication system, where the communication system may include the foregoing terminal device and network device.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on a computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing system, apparatus, and module, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are only examples. For example, the module division is only logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate components may or may not be physically separate, and components displayed as modules may or may not be physical modules, may be located in one position, or may be distributed on a plurality of network modules. Some or all the modules may be selected based on actual needs to achieve the objectives of the solutions of embodiments.

In addition, functional modules in embodiments of this application may be integrated into one processing unit, or each of the modules may exist alone physically, or two or more modules are integrated into one module.

When the functions are implemented in the form of a software functional module and sold or used as an independent product, the functions may be stored in a computer-readable storage medium. Based on such an understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, such as a USB flash drive, a removable hard disk, a ROM, a RAM, a magnetic disk, or an optical disc.

The foregoing descriptions are only specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first communication apparatus, first information, wherein the first information comprises information about one or more timestamps;
determining, by the first communication apparatus, timing advance (TA) compensation based on a reference location corresponding to the one or more timestamps; and
sending, by the first communication apparatus, an SRS signal based on the TA compensation and a channel sounding reference signal (SRS) resource corresponding to the one or more timestamps, wherein each of the one or more timestamps corresponds to at least one SRS.

2. The method according to claim 1, wherein the method further comprises:
receiving, by the first communication apparatus, the reference location corresponding to the one or more timestamps.

3. The method according to claim 1 or 2, wherein the determining, by the first communication apparatus, TA compensation based on a reference location corresponding to the one or more timestamps specifically comprises: determining, by the first communication apparatus, the TA compensation based on a geographical location of the first communication apparatus and the reference location corresponding to the one or more timestamps.

4. The method according to any one of claims 1 to 3, wherein the method further comprises: receiving, by the first communication apparatus, ephemeris information.

5. The method according to any one of claims 1 to 4, wherein the method further comprises: sending, by the first communication apparatus, information about the TA compensation.

6. The method according to any one of claims 1 to 5, wherein the method further comprises: receiving, by the first communication apparatus, SRS group information.

7. The method according to claim 6, wherein the method further comprises: sending, by the first communication apparatus, a TA compensation difference between different SRS groups.

8. A communication method, comprising:
sending, by a second communication apparatus, first information, wherein the first information comprises information about one or more timestamps;
receiving, by the second communication apparatus, an SRS signal based on a channel sounding reference signal (SRS) resource corresponding to the one or more timestamps, wherein each of the one or more timestamps corresponds to at least one SRS;
determining a TA time difference based on the SRS signal; and
sending the TA time difference.

9. The method according to claim 8, wherein the method further comprises:
sending, by the second communication apparatus, a reference location corresponding to the one or more timestamps.

10. The method according to claim 8 or 9, wherein the method further comprises: sending, by the second communication apparatus, ephemeris information.

11. The method according to any one of claims 8 to 10, wherein the method further comprises: receiving, by the second communication apparatus, information about the TA compensation.

12. The method according to any one of claims 8 to 11, wherein the method further comprises: sending, by the second communication apparatus, SRS group information.

13. The method according to claim 12, wherein the method further comprises: receiving, by the second communication apparatus, a TA compensation difference between different SRS groups.

14. The method according to any one of claims 8 to 13, wherein the method further comprises: receiving, by the second communication apparatus, second information from a location management function LMF entity, wherein the second information comprises content in the first information.

15. The method according to any one of claims 8 to 13, wherein the method further comprises: sending, by the second communication apparatus, second information or a third message to a location management function LMF entity, wherein content comprised in the second information is the same as content in the first information, and the third message comprises the content in the second information.

16. A communication method, comprising:
sending, by a third communication apparatus, second information, wherein the second information comprises information about one or more timestamps and SRS resource information corresponding to each timestamp; and
receiving, by the third communication apparatus, a TA time difference, wherein the TA time difference is obtained based on the one or more timestamps and a channel sounding reference signal (SRS) resource corresponding to the one or more timestamps, wherein each of the one or more timestamps corresponds to at least one SRS.

17. The method according to claim 16, wherein the method further comprises: receiving, by the third communication apparatus, ephemeris information.

18. The method according to claim 16 or 17, wherein the method further comprises: receiving, by the third communication apparatus, third information, wherein the third message comprises content in the second information.

19. A communication apparatus, comprising:
a transceiver unit, configured to receive first information, wherein the first information comprises information about one or more timestamps; and
a processing unit, configured to determine timing advance (TA) compensation based on a reference location corresponding to the one or more timestamps, wherein
the transceiver unit is further configured to send an SRS signal based on the TA compensation and a channel sounding reference signal (SRS) resource corresponding to the one or more timestamps, wherein each of the one or more timestamps corresponds to at least one SRS.

20. The communication apparatus according to claim 19, wherein the transceiver unit is further configured to receive the reference location corresponding to the one or more timestamps.

21. The communication apparatus according to claim 19 or 20, wherein that the processing unit is configured to determine TA compensation based on a reference location corresponding to the one or more timestamps specifically comprises: the processing unit determines the TA compensation based on a geographical location of the communication apparatus and the reference location corresponding to the one or more timestamps.

22. The communication apparatus according to any one of claims 19 to 21, wherein the transceiver unit is further configured to receive ephemeris information.

23. The communication apparatus according to any one of claims 19 to 22, wherein the transceiver unit is further configured to send information about the TA compensation.

24. The communication apparatus according to any one of claims 19 to 23, wherein the transceiver unit is further configured to receive SRS group information.

25. The communication apparatus according to claim 24, wherein the transceiver unit is further configured to send a TA compensation difference between different SRS groups.

26. A communication apparatus, comprising:
a transceiver unit, configured to: send first information, wherein the first information comprises information about one or more timestamps; and receive an SRS signal based on a channel sounding reference signal (SRS) resource corresponding to the one or more timestamps, wherein each of the one or more timestamps corresponds to at least one SRS; and
a processing unit, configured to determine a TA time difference based on the SRS signal, wherein
the transceiver unit is further configured to send the TA time difference.

27. The communication apparatus according to claim 26, wherein the transceiver unit is further configured to send a reference location corresponding to the one or more timestamps.

28. The communication apparatus according to claim 26 or 27, wherein the transceiver unit is further configured to send ephemeris information.

29. The communication apparatus according to any one of claims 26 to 28, wherein the transceiver unit is further configured to receive information about the TA compensation.

30. The communication apparatus according to any one of claims 26 to 29, wherein the transceiver unit is further configured to send SRS group information.

31. The communication apparatus according to claim 30, wherein the transceiver unit is further configured to receive a TA compensation difference between different SRS groups.

32. The communication apparatus according to any one of claims 26 to 31, wherein the transceiver unit is further configured to receive second information from a location management function LMF entity, wherein the second information comprises content in the first information.

33. The communication apparatus according to any one of claims 26 to 31, wherein the transceiver unit is further configured to send second information or a third message to a location management function LMF entity, wherein content comprised in the second information is the same as content in the first information, and the third message comprises the content in the second information.

34. A communication apparatus, comprising:
a transceiver unit, configured to send second information, wherein the second information comprises information about one or more timestamps and SRS resource information corresponding to each timestamp, wherein
the transceiver unit is further configured to receive a TA time difference, wherein the TA time difference is obtained based on the one or more timestamps and a channel sounding reference signal (SRS) resource corresponding to the one or more timestamps, wherein each of the one or more timestamps corresponds to at least one SRS; and
a processing unit, configured to perform terminal positioning based on the TA time difference.

35. The communication apparatus according to claim 34, wherein the transceiver unit is further configured to receive ephemeris information.

36. The communication apparatus according to claim 34 or 35, wherein the transceiver unit is further configured to receive third information, wherein the third message comprises content in the second information.

37. A communication apparatus, comprising a processor and a memory, wherein the memory is configured to store a computer program, and the processor is configured to invoke and run the computer program to perform the method according to any one of claims 1 to 18.

38. A communication system, comprising a terminal device, a network device, and a location management function LMF entity, wherein the terminal device is configured to perform the method according to any one of claims 1 to 7, the network device is configured to perform the method according to any one of claims 8 to 15, and the LMF is configured to perform the method according to any one of claims 16 to 18.

39. A chip, comprising a processor, configured to invoke computer instructions from a memory and run the computer instructions, so that a device in which the chip is installed performs the method according to any one of claims 1 to 18.

40. A computer-readable storage medium, configured to store computer program instructions, wherein the computer program enables a computer to perform the method according to any one of claims 1 to 18.

41. A computer program product, comprising computer program instructions, wherein the computer program instructions enable a computer to perform the method according to any one of claims 1 to 18.
